# EUROPÄISCHE PATENTSCHRIFT

(11) **EP 1 983 029 B1**
(45) Veröffentlichungstag und Bekanntmachung des Hinweises auf die Patenterteilung: **15.03.2017**
(21) Anmeldenummer: 08012791.3
(22) Anmeldetag: 24.03.2006
(51) Int. Cl.: C08L 77/00, C08L 77/02, C08L 77/06, C08L 77/10

(54) **Gehäuse aus einer Polyamidformmasse mit verbesserter Fließfähigkeit, deren Herstellung sowie deren Verwendung**
Casing made from a polyamide moulding material with improved flowing capability, its production and application
Boîtier composé d'une masse de formage en polyamide dotée d'une fluidité améliorée, sa fabrication et son utilisation

(30) Priorität: 20.05.2005 DE 102005023420
(43) Veröffentlichungstag der Anmeldung: 22.10.2008
(62) Teilanmeldung aus: 06723704.0
(73) Patentinhaber: EMS-PATENT AG, 7013 Domat/Ems (CH)
(72) Erfinder: Schwitter, Paul, 8718 Schänis (CH); Stöppelmann, Georg, 7402 Bonaduz (CH); Stolarz, Alex, 7402 Bonaduz (CH); Thullen Helmut, 7402 Bonaduz (CH)
(74) Vertreter: Pfenning, Meinig & Partner mbB

(56) Entgegenhaltungen:
- EP-A- 0 957 131
- EP-A2- 0 272 695
- WO-A-2005/000953
- M. I. Kohan: "Nylon Plastics Handbook", 1995, Hanser pages 41-44,

## Beschreibung

Die Erfindung betrifft ein Gehäuse, insbesondere Mobiltelefongehäuse aus Polyamidformmassen, enthaltend viskositätsstabile Polyamidoligomere, mit deutlich verbesserter Fließfähigkeit, deren Herstellung sowie deren Verwendung.

Zur Herstellung leitfähiger Thermoplaste werden üblicherweise leitfähige Substanzen, wie z.B. Ruß, Kohlefasern, Graphit, Metallfasern und -pulver, metallisierte Glasfasern oder leitfähige Polymere mit konjugiertem Elektronensystem, wie beispielsweise Polyanilin, Poly-para-phenylenvinylen oder Polythiophen, eingesetzt.

Neben der Leitfähigkeit werden insbesondere bei Anwendungen im Kfz-Bereich auch hohe Anforderungen, wie z.B. hinsichtlich erstklassiger Oberflächenqualität, hoher Zähigkeit, geringer Dichte und hoher Fließfähigkeit an die Thermoplaste gestellt. Als Leitfähigkeitsadditiv wird für Thermoplaste häufig Kohlenstoff in verschiedenen Modifikationen, wie z.B. Ruß, Kohlefasern, Graphit oder Graphitfaser oder -fibrillen, deren Durchmesser zwischen 1 und 500 nm liegt, eingesetzt.

Durch Einsatz von Ruß und Kohlefasern kommt es wegen der hohen benötigten Konzentration häufig zur Verschlechterung der Oberflächenqualität, der Zähigkeit und der Fließfähigkeit, weil vergleichsweise hohe Russkonzentrationen für die geforderten Leitfähigkeiten notwendig sind (R.G. Gilg, "Ruß für leitfähige Kunststoffe" in: Elektrisch leitende Kunststoffe, Hrsg: H. J. Mair, S. Roth, 2. Aufl., Carl Hanser Verlag, 1989, München, Wien, S. 21-36).

Durch Einsatz von Kohlenstoff-Nanofibrillen, wie sie beispielsweise von der Fa. Hyperion Catalysis angeboten werden, müssen nur vergleichsweise geringe Mengen zugesetzt werden, um ausreichende Leitfähigkeiten zu erzielen (US-A 5643502). Allerdings ist die homogene Dispersion der Kohlenstoff-Nanofibrillen in der Polymermatrix sehr schwierig, da Graphitfasern zu Aggregatbildung neigen. Dies limitiert den Einsatz von Kohlenstoff-Nanofibrillen stark und erfordert den Einsatz von Masterbatchen. Zusätzlich ist die Verfügbarkeit der Kohlenstoff-Nanofibrillen durch den aufwendigen und sehr teuren Herstellungsprozess stark eingeschränkt.

Rußgefüllte und peroxidstabile Formmassen werden beispielsweise in EP 0 953 796 B1 beschrieben. Der Vorteil dieser Polyamidformmassen, bei denen Ruße mit niedriger spezifischer Oberfläche zum Einsatz kommen, besteht in der sehr guten Sourgasbeständigkeit. Allerdings ist nachteilig, dass durch die Verwendung von Ruß die Schmelzviskosität stark ansteigt und somit die Verarbeitung mit Spritzgussmaschinen, insbesondere bei der Herstellung dünnwandiger Teile, Probleme bereitet, da die Fließfähigkeit der Schmelze zu gering ist.

Hochfließfähige, niederviskose thermoplastische Zusammensetzungen sind für eine Vielzahl von Spritzgussanwendungen interessant. Beispielsweise erfordern Dünnwandbauteile in der Elektro-, Elektronik- oder KFZ-Industrie niedrige Schmelzviskositäten der Thermoplastzusammensetzungen, damit ein Füllen der Form bei möglichst geringen Fülldrücken möglich ist. Des weiteren können häufig mit niederviskosen Polymerzusammensetzungen auch kürzere Zykluszeiten realisiert werden. Darüber hinaus ist eine gute Fließfähigkeit gerade bei hochgefüllten Polymerzusammensetzungen, beispielsweise bei Gehalten an Glas- oder Kohlenstofffasern oder Mineral von über 40 %, äußerst wichtig, insbesondere wenn zusätzlich noch Ruß als Leitfähigkeitsadditiv zugesetzt wird. Trotz hoher Fließfähigkeit werden jedoch hohe mechanische Anforderungen an die Bauteile gestellt, so dass durch die Viskositätserniedrigung keine Beeinträchtigung der mechanischen Eigenschaften verursacht werden darf.

Der einfachste Weg, die Fließfähigkeit von Polymeren zu verbessern, besteht darin, deren Molmasse zu verringern. Als Nachteil muss man jedoch in Kauf nehmen, dass die mechanischen Eigenschaften der Polymere z.T. drastisch verschlechtert werden.

Die US 6,548,591 B2 beschreibt eine thermoplastische Polyamidformmasse, wobei durch Verwendung eines niedermolekularen Polyamids mit höherer Schmelztemperatur eine Verbesserung des Fließverhaltens erzielt wird. Aufgrund der Tatsache, dass ein höher als die Matrix schmelzendes Oligomer zu verwenden ist, kann es zu Unverträglichkeiten zwischen Matrix und Oligomer kommen. Dies zeigt sich beispielsweise darin, dass bei 5 Gew.-% eines PA66-Oligomers die Schlagzähigkeit eines hochmolekularen Polyamids 6 von 90 kJ/m² auf 30 kJ/m² reduziert.

In EP 0 957 131 B1 wird die Verbesserung der Fließeigenschaften von Polyamidformassen durch die Zugabe von Polyamid-Präpolymeren, d.h. mit reaktionsfähigen Endgruppen versehenen Polyamidoligomeren, beschrieben. Diese Präpolymere haben aufgrund der hohen Endgruppenkonzentration, wobei Amino- und Carboxylgruppen gleichzeitig vorliegen, den Nachteil, dass sie während der Compoundierung mit der hochmolekularen Komponente und der nachfolgenden Verarbeitung nicht viskositätsstabil sind. Es tritt ein unerwünschter Viskositätsanstieg ein, was die Fließfähigkeit wiederum verschlechtert.

Wegen der hohen Konzentration an Amino- und Carboxylgruppen dieser Präpolymere können auch unerwünschte Reaktionen mit weiteren Rezepturkomponenten, wie z.B. den Stabilisatoren, den Glasfaserschlichten oder den Schlagzähmodifikatoren, eintreten.

Die EP 0 272 695 B1 offenbart einen thermoplastischen Multiphasen-Blend zur Herstellung von Gehäusen, umfassend 60 bis 90 Gew.-% einer Polyamidmatrix mit einem zahlengemittelten Moiekulargewicht zwischen 3000 und 8000 und komplementär hierzu 10 bis 40 Gew.-% zumindest eines organischen Verstärkungsstoffes mit einer Schlagzähigkeit unterhalb 10.000 psi mit einer durchschnittlichen Partikelgröße von weniger als 1.000 nm. Die Polyamidmatrix wird hierbei durch eine Transamidierungsreaktion eines hoch- und eines niedermolekularen Polyamids gebildet. Auch dieser Blend ist aber für die Compoundierung nicht geeignet, da er nicht schmelzestabil und anfällig für Sekundärreaktionen mit weiteren Inhaltsstoffen ist.

Eine andere Möglichkeit ist der Einsatz von sog. Fließhilfsmitteln, auch als Fließhilfen oder innere Gleitmittel bezeichnet, die dem hochmolekularen Polymer als Additiv zugesetzt werden können. Derartige Fließhilfsmittel sind in der Literatur(wie z.B. aus Kunststoffe 2000, 9, S. 116-118) bekannt und können beispielsweise Fettsäureester von Polyolen oder Amide aus Fettsäuren und Aminen sein. Derartige Fettsäureester, beispielsweise Pentaerithroltetrastearat oder Ethylenglykoldimontanoat, sind jedoch mit polaren Thermoplasten, wie Polyamiden, nur begrenzt mischbar und neigen daher zur Migration und dem Anreichern an der Formteiloberfläche. Dies kann hinsichtlich der Haftung in Mehrschichtverbunden oder von Lacken und Metallen bei beschichteten Formteilen nachteilig sein.

Alternativ zu den oberflächenaktiven Fließhilfsmitteln können interne Fließhilfsmittel eingesetzt werden, die mit dem Polymer verträglich sind. Hierfür eignen sich beispielsweise niedermolekulare Verbindungen oder verzweigte oder dendritische Polymere mit einer der Polymermatrix ähnlichen Polarität. Derartige hochverzweigte dendritische Systeme werden beispielsweise in DE 102 55 044 A1 beschrieben.

Fließverbessernde Eigenschaften von Pfropfcopolymeren sind beispielsweise aus EP 1 217 039 B1 bekannt. Diese Druckschrift beschreibt eine leichtfließende Polyesterformmasse bestehend aus thermoplastischem Polyester und einem Polyamin/Polyamid-Pfropfcopolymer.

Die fließverbessernde Wirkung von Fluorpolymeren wird in EP 1 454 963 A1 beschrieben. Nachteilig ist der hohe Preis der Fluorpolymere, die Gefahr der Korrosion sowie die geringe Wirksamkeit in Polyamiden.

Es ist daher Aufgabe der Erfindung, ein Gehäuse aus einer hochfließfähigen Polyamidformmasse zur Verfügung zu stellen, mit denen dünnwandige Bauteile mit guten mechanischen Eigenschaften herstellbar sind und die nicht die Nachteile des Standes der Technik aufweisen.

Diese Aufgabe wird mit dem Gehäuse mit den Merkmalen des Patentanspruchs 1 gelöst, wobei die Unteransprüche vorteilhafte Weiterbildungen darstellen.

Die erfindungsgemäßen Gehäuse, insbesondere Mobiltelefongehäuse, bestehen aus einer Polyamidformmasse, enthaltend mindestens ein thermoplastisches Polyamid und mindestens ein Polyamid-Oligomer mit linearer oder verzweigter Kettenstruktur mit einer zahlenmittleren Molmasse von 800 bis 5000 g/mol mit basischen Endgruppen, die zumindest teilweise NH₂-Endgruppen sind, und Carboxylendgruppen, wobei eine dieser Endgruppen im Überschuss vorliegt und die Konzentration der im Überschuss vorliegenden Endgruppe maximal 300 mmol/kg beträgt, im Gewichtsverhältnis thermoplastisches Polyamid : Polyamid-Oligomer von 70:30 bis 99,5:0,5. Erfindungsgemäß erstrecken sich die Polyamidformmassen auf alle Polyamide, d.h. kristalline oder amorphe Polyamide oder Mischungen hiervon.

Der Gegenstand der vorliegenden Erfindung besteht somit darin, dass die Gehäuse aus Polyamidformmassen gebildet sind, in die zusätzliche Anteile von viskositätsstabilen Polyamidoligomeren eingearbeitet sind.

Die enthaltenen Polyamid-Oligomere führen zur Reduktion der Schmelzviskosität der Formmassen und damit zu einer deutlich verbesserten Verarbeitbarkeit, insbesondere bei dünnwandigen Formteilen, wie Gehäusen. Die erfindungsgemäßen Polyamid-Oligomere können dabei nicht migrieren, wie z.B. bestimmte niedermolekulare Weichmacher, und bilden somit keine bzw. nur geringfügige Beläge auf den Formteilen oder den Werkzeugoberflächen.

Ebenfalls wird die Oberflächenqualität, insbesondere von verstärkten Fertigteilen, stark verbessert. Aufgrund der Füllstoffe ist die Oberfläche oft rauh und fleckig oder zeigt Einbuchtungen und Unebenheiten. Die Zugabe der Polyamid-Oligomere bewirkt eine glattere und gleichmäßigere Oberfläche der Formteile und verleiht ihnen einen hohen Glanz.

Gegebenenfalls zudosierte Füllstoffe und Leitfähigkeitsadditive werden von den Polyamid-Oligomeren gut benetzt und erleichtern somit die Einarbeitung, insbesondere bei hohen Füllgraden.

Die dafür geeigneten Polyamidoligomere werden in der Schmelze, zusammen mit anderen Bestandteilen der Zusammensetzung, dem hochmolekularen Polyamid hinzugefügt.

Die Polyamidoligomere besitzen bedingt durch die Wahl der Monomere nur wenige kondensationsfähige Kettenenden, etwa vergleichbar der Endgruppenkonzentration der üblichen Polyamide mittlerer und hoher Molmasse.

Aufgrund dieser Endgruppenkonfiguration der erfindungsgemäßen Polyamidoligomere tritt während der Compoundierung oder der Verarbeitung weder ein nennenswerter Polymeraufbau hinsichtlich der Oligomere noch ein Abbau der Polymermatrix ein, so dass die erfindungsgemäßen Polyamidformmassen schmelzestabil sind. Darüber hinaus finden Nebenreaktionen mit anderen Rezepturbestandteilen praktisch nicht statt. Aufgrund der ähnlichen Polarität von Oligomer und Polymermatrix ist eine gute Verträglichkeit zwischen den Komponenten gegeben, wodurch ein nachteiliges Ausschwitzen vermieden wird.

Bevorzugt beträgt die Konzentration der im Überschuss vorliegenden Endgruppe maximal 100 mmol/kg. Weiter ist bevorzugt, dass die Konzentration der im Überschuss vorliegenden Endgruppe mindestens 20 mmol/kg beträgt.

Die erfindungsgemäßen, viskositätsstabilen Polyamid-Oligomere haben eine lineare oder verzweigte Kettenstruktur, eine Molmasse kleiner 5000 g/mol und zeichnen sich dadurch aus, dass mindestens 50 %, bevorzugt 60 - 80 % der Kettenenden nicht kondensationsaktiv sind und insgesamt entweder die basischen oder die sauren Kettenenden überwiegen. Unabhängig von der Molmasse der Polyamid-Oligomere beträgt die maximale Konzentration an primären Aminoendgruppen oder COOH-Endgruppen 300, bevorzugt 100 mmol/kg.

Dabei gelten als basischer Anteil sowohl aminische funktionelle Gruppen wie R₃N, R₂NH, RNH₂ als auch Carboxylat, also die deprotonierte Carboxylfunktionalität, die sich am Kettenende oder in der Oligomerstruktur befinden können.

Die erfindungsgemäßen Polyamid-Oligomere besitzen demnach nur noch sehr wenige reaktive Endgruppen und sind daher praktisch nicht mehr kondensationsfähig mit anderen funktionalisierten Bausteinen, wie Monomeren, Oligomeren oder Polymeren. Im Gegensatz zu den bekannten reaktiven Polyamidoligomeren sind die erfindungsgemäßen Oligomere als Reinsubstanz und in geeigneter Abmischung mit Polyamidformmassen außerordentlich abbaustabil und sogar in der Lage den Abbau solcher Formmassen in der Schmelze weitgehend zu unterbinden.

Polyamide können aus einer Vielzahl von Monomerbausteinen aufgebaut sein, so dass auch eine Vielzahl spezieller Endeigenschaften möglich ist. Diese hohe Variationsbreite gilt auch für die erfindungsgemäßen Polyamidoligomere. Durch Wahl und Kombination der bekannten Polyamidbausteine und über die gezielte Einstellung der Molmasse können Eigenschaften, wie die Kristallinität, der Schmelz- bzw. Glasumwandlungspunkt, die Affinität zu Substraten und der Feuchtehaushalt, also der Grundcharakter des Oligomers, gezielt eingestellt werden.

Auch ist es möglich, neben der rein linearen Kettenstruktur gezielt verzweigte Oligomere herzustellen. Die dabei für Polyamide gültigen Regeln, wie sie z.B. in EP 0 345 645 aufgezeigt sind, gelten für die Vorgabe der Verzweigungsstruktur auch bei den Polyamidoligomeren, insbesondere wenn ihre Molmasse über 800 g/mol liegt. Damit sind strukturverzweigte Polyamidoligomere dann reproduzierbar und ohne die Bildung von Ablagerungen im Reaktor reproduzierbar herstellbar, wenn neben den strukturbildenden Bausteinen ausschließlich Aminosäuren und/oder Lactame die Grundmonomere sind.

Erfindungsrelevantes Merkmal der Polyamidoligomere ist nicht eine spezielle Wahl der Bausteine und ihrer Zusammensetzung an sich, sondern dass sie arm an kondensationsaktiven Endgruppen sind und insbesondere, dass das nach der Kondensationsreaktion verbleibende Verhältnis der im Überschuss vorliegenden Endgruppen zu der im Unterschuss vorliegenden Endgruppe größer als 1:1, bevorzugt größer als 2:1 ist.

Die Konzentration der im Überschuss vorliegenden Endgruppen beträgt dabei vorzugsweise maximal 100 mmol/kg. Existieren darüber hinaus weitere Aminoendgruppen, so sind dies die wenig bis gar nicht kondensationsfähigen, sekundären oder tertiären Aminoendgruppen. Die Substituenten an den endständigen sekundären oder tertiären Aminoendgruppen sind bevorzugt Alkyl-, Cycloalkyl- oder Arylreste mit mehr als 4 C-Atomen, insbesondere mit 4 bis 44 C-Atomen. Von besonderer Bedeutung ist, dass die Polyamid-Oligomere eine hervorragende Wirkung bei der thermoplastischen Verarbeitung von Kunststoffmassen ausüben können, und z.B. die Fließfähigkeit der Schmelzen verbessert wird, sich die Kristallisationsgeschwindigkeit erhöhen lässt und oft das Entformungsverhalten wesentlich verbessert ist. Dabei sind Abbaueffekte im Sinne einer hydrolytischen Kettenspaltung praktisch ausgeschlossen und es tritt keine Korrosion an den Verarbeitungsmaschinen ein, wie sie von COOHhaltigen Massen her bekannt sind.

Damit die erfindungsgemäßen Polyamid-Oligomere für sich oder in Mischung mit hochmolekularen Polyamiden abbaustabil sind, beträgt die Konzentration der im Überschuss vorliegenden Endgruppen mindestens 20, bevorzugt mindestens 50 mmol/kg.

Polyamidoligomere enthaltende Polyamidformmassen besitzen erstaunlicherweise dann eine hervorragende Hydrolyse- und Bewitterungsstabilität, wenn das verwendete Oligomer eine hohe Konzentration - in mmol/kg ausgedrückt - an basischen Gruppen enthält. Am vorteilhaftesten werden diese in die Oligomerstruktur eingefügt, wenn die für die Kettenterminierung verwendete Verbindung außer der kondensationsaktiven NH₂- oder COOH-Gruppe eine sterisch abgeschirmte Aminogruppe (sek. oder tert. Amin), wie z.B. in den Verbindungen der Formeln (I), (II) und (IV), mitenthält. Solche speziellen kettenterminierenden Bausteine sind z.B. N-alkylierte Diamine, wie z.B. Cocopropylendiamin oder C16-22-Alkylpropylendiamin (Duomeen M., von Akzo), 3-Cyclohexylaminopropylendiamin aber insbesondere auch das Triacetondiamin. Der Zusatz von entsprechend aufgebauten Polyamidoligomeren zu Polyamid-formmassen verbessert deren Hydrolyse- und Bewitterungsstabilität, ohne dass teure Stabilisatoren, wie z.B. vom sog. HALS-Typ speziell zugesetzt werden müssen.

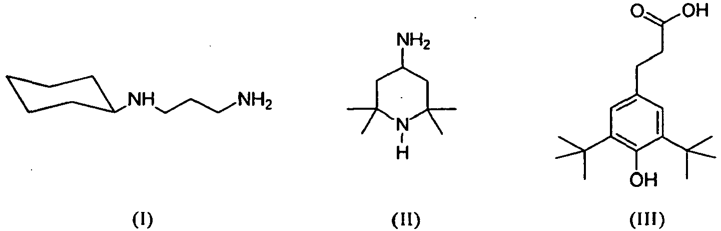

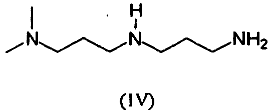

Ergänzend ist es möglich, für die Oligomerherstellung Monomerbausteine mitzuverwenden, welche eine sterisch gehinderte Phenolstruktur im Molekül mitenthalten. Dadurch verbessert ein solches Oligomer bei der Zugabe zu einer Kunststoffmasse, insbesondere zu einer Polyamidformmasse, zusätzlich deren Hitzestabilität. Eine entsprechende, beispielhafte Monocarbonsäure ist die 3-(3,5-Di-tert.-butyl-4-hydoxyphenyl)-propionsäure (Irganox 1310 von Ciba SC), Formel (III). Ist damit das Polyamidoligomer folgend diesen Möglichkeiten in seiner Molmasse geregelt und enthält also an einem Kettenende die sterisch gehinderte Aminfunktion und am anderen Kettenende die sterisch gehinderte Phenolgruppe, so bewirkt es bei geeigneter Zugabe, insbesondere zu einer Polyamidformmasse, dass diese gleichzeitig eine hervorragende Hydrolyse-, Bewitterungs- und Hitzestabilität besitzt.

Selbstverständlich sind die verschiedensten Kombinationsmöglichkeiten der Kettenlängenregelung je nach beabsichtigter Wirkung möglich. So kann z.B. nur ein Teil der Carbonsäure die sterisch gehinderte Phenolfunktion tragen und der restliche Anteil Monoalkyl sein, indem man z.B. eine technische Stearinsäure mitverwendet und es kann nur ein Teil ein sterisch gehindertes Amin sein und der Rest z.B. ein technisches Fettamin mit z.B. 20 C-Atomen. Durch solche speziellen Kombinationen ist gewährleistet, dass das Polyamidoligomer gleichzeitig seine stabilisierende Wirkung entfaltet und weiterhin hervorragend als Gleit- und Entformungsmittel wirkt.

Monomere für die Herstellung der erfindungsgemäßen Polyamidoligomere sind lineare und verzweigtkettige Diamine und Dicarbonsäuren mit 2 bis 44 C-Atomen, ferner cyclische, kondensationsaktive Diamine mit aliphatischer Aminfunktion, wie z.B. 1,3- oder 1,4-Bisaminomethylcyclo-hexan oder m- und p-Xylylendiamin, bicyclische und dabei auch mehrfach substituierte Diamine, wie z.B. 3,3'-Dimethyl-4,4'-diamino-dicyclohexylmethan oder auch -propan oder auch das sog. TCD-Diamin (3(4),8(9)-Bis(aminomethyl)-tricyc-lo[5.2.1.0^{2,6}]decan) oder Diamine mit der Norbornanstruktur. Geeignete Dicarbonsäuren sind ferner dimerisierte Fettsäuren sowie Iso- und Terephthalsäure und Naphthalindicarbonsäuren.

Die Molmassenregelung erfolgt z.B. so, dass man zu den Monomerbausteinen, die in äquimolaren Anteilen vorliegen, ein Monoamin und eine Monocarbonsäure hinzugibt, beispielsweise Stearylamin und Stearinsäure im Mol-Verhältnis von annähernd 1:1.

Eine weitere Möglichkeit für die Molmassen- und Endgruppenregelung ist es, bei Verwendung von bi- oder mehrfunktionellen Verbindungen die dabei entstehenden funktionellen Endgruppen der einen Art durch Zugabe einer monofunktionellen Verbindung der anderen Art zu kompensieren, wie z.B. die Kombination eines nichtflüchtigen Etherdiamins mit der entsprechenden Menge an Stearinsäure.

Bei Verwendung von Aminosäuren oder Lactamen können auch tri- oder sogar mehrfunktionelle Verbindungen zur Einstellung der Endgruppenart und -konzentration eingesetzt werden, wie z.B. Trimesinsäure oder Ethylendiamintetrapropionsäure. Für die Strukturterminierung werden dann 3 oder 4 Äquivalente Monoamin, wie z.B. Stearylamin, benötigt. Dabei verfährt man so, dass ein vorbestimmter Überschuss der einen Funktionalität verbleibt und für spezielle Wirkungen Verbindundungen gezielt mitverwendet werden, welche eine zusätzliche sterisch gehinderte Aminfunktion oder eine sterisch gehinderte Phenolfunktion mitenthalten.

Eine für die Herstellung von strukturverzweigten Oligomeren hervorragende geeignete Verbindungsklasse sind ferner die sog. Styrol-Maleinsäureanhydrid-Harze mit z.B. 5 bis 10 Maleinsäureanhydridgruppen (MA) im Molekül. Dabei reagiert die MA-Gruppe in der Schmelze mit einer Aminsäure oder einem Lactam unter Imidbildung. Dieser "Oligomerarm" ist dann carboxylterminiert und die Kettenterminierung erfolgt unter Verwendung eines Monoamins. Auf Aminosäure und Lactam basierende Oligomere mit diesem Verzweigungsmerkmal besitzen auch bei vergleichsweise höherer Molmasse noch eine hervorragende Fließfähigkeit und sind damit speziell geeignet für hochgefüllte Polyamidformulierungen mit Oberflächen von hervorragendem Glanz.

Die technische Herstellung der Oligomeren kann in Reaktionsgefäßen erfolgen, wie sie zur Herstellung üblicher Polyamide verwendet werden, und sie unterliegt im wesentlichen den Regeln, wie sie für die Polyamidsynthese bekannt sind.

Die den hochmolekularen Polyamidformmassen zugesetzten Polyamidoligomere verursachen abhängig von der Konzentration eine sehr deutliche Viskositätsabnahme (90 % in Beispiel 1, ca. 900 % in Beispiel 3), so dass der MVR um ein Mehrfaches zunehmen kann. Dies macht sich auch bei der Fließlänge bemerkbar. Abhängig von der Konzentration und der Art des Polyamidoligomers können Zunahmen der Fließlänge von über 100 % realisiert werden.

Des Weiteren ermöglicht die.Kombination von teilkristallinen oder amorphen Polyamiden mit Polyamid-Oligomeren die Herstellung verzugsarmer Formkörper, insbesondere in hoch verstärkten bzw. gefüllten Systemen. Bei der Verarbeitung der PA-Oligomer enthaltenden und damit besser fließfähigen Polyamidformmassen resultieren spannungsärmere Formkörper mit in der Regel verbesserter Oberflächenqualität. Insbesondere bei amorphen Polyamiden sowie deren Blends mit teilkristallinen Polyamiden führt der Zusatz an erfindungsgemäßen Polyamid-Oligomeren zu einer deutlichen Reduktion des Verzugs. Dieser Effekt tritt um so mehr in Erscheinung, je höher die Konzentration an faser- und/oder teilchenförmigen Füllstoffen ist. Gerade der Zusatz von kleinskaligen, teilchenförmigen Füllstoffen, wie z.B. gemahlenes oder gefälltes Calciumcarbonat, Aluminiumsilikat (Kaolin) oder Magnesiumsilikat (Talk), oder auch der Zusatz von gemahlenen Glasfasern reduziert die Fließfähigkeit von Polyamidschmelzen stark, so dass die Verarbeitung erschwert ist und im Hinblick auf die Herstellung verzugsarmer Formteile keine optimalen Ergebnisse erzielt werden. Der Zusatz von PA-Oligomeren vermag jedoch auch in diesen Fällen die Schmelzviskosität der PA-Formmassen so weit zu erniedrigen, dass bei optimaler Verarbeitung Formteile mit geringer Schwindung und sehr geringem Verzug resultieren. Vorzugsweise liegt der Verzug dabei unterhalb von 5 %, ganz besonders bevorzugt unterhalb von 3 %.

Als Polyamide für die erfindungsgemäße Formmasse werden vorteilhafterweise Polykondensate aus aliphatischen Lactamen oder ω-Aminocarbonsäuren mit 4 bis 44 Kohlenstofffatomen, bevorzugt 4 bis 18 Kohlenstoff-atomen, oder solche aus aromatischer Aminocarbonsäuren mit 6 bis 20 Kohlenstoffatomen eingesetzt.

Ebenfalls geeignet sind Polykondensate aus mindestens einem Diamin und mindest einer Dicarbonsäure mit jeweils 2 bis 44 Kohlenstoff-Atomen. Beispiele für solche Diamine sind Ethylendiamin, 1,4-Diaminobutan, 1,6-Diaminohexan, 1,10-Diaminodecan, 1,12-Diaminododecan, m- und p-Xylylendiamin, Cyclohexyldimethylenamin, Bis-(aminocyclohexyl)methan und seine Alkylderivate.

Beispiele für Dicarbonsäuren sind Bernstein-, Glutar-, Adipin-, Pimelin-, Kork-, Azelain- und Sebacinsäure, Dodecandicarbonsäure, Dimerfettsäuren mit 36 oder 44 C-Atomen, 1,6-Cyclohexandicarbonsäure, Terephthalsäure, Isophthalsäure und Naphthalindicarbonsäure.

Besonders geeignete teilkristalline Polyamide für die erfindungsgemäße Formmasse sind dabei Homo- und Copolyamide auf Basis von PA6, PA66, PA46, PA11, PA12, PA1212, PA1012, PA610, PA612, PA69, PA1010, PA6T, PA6T6I, PA6T66,PA9T, PA10T, PA12T, PA12I, deren Gemische oder Copolymere auf Basis dieser Polyamide, wobei PA6, PA66, PA11, PA12, PA1212, PA6T6I, PA6T66 bevorzugt sind. Bevorzugt sind auch Copolymere auf Basis von den vorgenannten Polyamiden, wie z.B. 12T/12, 10T/12, 12T/106 und 10T/106. Weiterhin können erfindungsgemäß auch Nylon 6/66, Nylon 6/612, Nylon 6/66/610, Nylon 6/66/12, Nylon 6/6T und Nylon 6/6I eingesetzt werden.

Bevorzugte amorphe oder mikrokristalline Homo- und Copolyamide weisen folgende Zusammensetzungen auf: PA 6I, 6I/6T, MXDI/6I, MXDI/MXDT/6I/6T, MXDI/12I, MAC-MI/12, MACMI/MACMT/12, 6I/MACMI/12, 6I/6T/MACMI/- MACMT/12, PACM6/11, PACM12, PACMI/PACM12, MACM6/11, MACM12, MACMI/MACM12, MACM12/PACM12, 6I/6T/PACMI/ PACMT/PACM12/612. Als cyclische Diamine kommen dabei beispielsweise MACM (3,3 Diamino-4,4-dimethyldicyclo-hexylmethan), PACM (3,3 Diaminodicyclohexylmethan) oder MXD (m-Xylydendiamin)in Frage.

Besonders geeignete Polyamide sind PA66 oder PA1010, als besonders bevorzugtes Copolyamid ist PA6I/6T zu nennen.

Eine besonders bevorzugte Ausführungsform der erfindungsgemäßen Gehäuse sieht vor, dass die Formmassen zusätzlich ein Leitfähigkeits-Additiv enthalten. Das Leitfähigkeits-Additiv ist dabei bevorzugt in einer Menge von 1 bis 50 Gew.-%, beson-ders bevorzugt von 3 bis 25 Gew.-%, bezogen auf die gesamte Polyamidformmasse, in der Polyamidformmasse enthalten.

Als Leitfähigkeitsadditiv für die erfindungsgemäßen als Gehäuse eingesetzten Polyamidformmassen kommen Ruße mit niedriger und hoher spezifischer Oberfläche sowie deren Mischungen, Graphite und Kohlenstoff-Nanofibrillen sowie Mischungen aus Rußen und Kohlenstoff-Nanofibrillen in Frage.

Die erfindungsgemäßen Ruße besitzen eine spezifische BET-Oberfläche, gemessen nach ASTM Standard D3037-89, von größer 5 m²/g und eine Dibutyphthalat-Absorption, gemessen nach ASTM Standard D2414-90, größer 50 ml/100 g. Bevorzugt eingesetzt werden allerdings Ruße mit einer spezifischen Oberfläche nach der BET-Methode von größer 200 m²/g und einer Dibutyphthalat-Absorption von größer 300 ml/100 g. Insbesondere bevorzugt werden Russe mit einer BET-Oberfläche im Bereich von 300 bis 2000 m²/g und einer Dibutyphthalat-Absorption im Bereich von 350 bis 1000 ml/100 g.

Bei den erfindungsgemäßen Leitfähigkeitsrußen liegt die Primärteilchengröße zwischen 0,005 und 0,2 µm, bevorzugt zwischen 0,01 und 0,1 µm. Auf der Rußoberfläche können sich eine Vielzahl von sauerstoffhalti-gen Gruppen, wie zum Beispiel Carböxyl-, Lactol-, Phenolgruppen, chinoide Carbonylgruppen und/oder Pyronstrukturen, befinden.

Bei der Auswahl der Ruße werden speziell hochreine Typen bevorzugt, da diese den Formmassen eine.hohe Peroxidbeständigkeit verleihen. Hochrein bedeutet in diesem Zusammenhang, dass die eingesetzten Ruße einen Aschegehalt kleiner 0.1 Gew.-%, einen Schwermetallgehalt kleiner 50 ppm und einen Schwefelgehalt kleiner 0.05 Gew.-% aufweisen.

Leitfähigkeitsruße können beispielsweise aus Acetylen, aus Synthesegas oder aus dem Furnace-Process aus Öl, Trägergasen und Luft hergestellt werden. Herstellungsprozesse sind beispielsweise in R. G. Gilg, "Ruß für leitfähige Kunststoffe" in: Elektrisch leitende Kunststoffe, Hrsg.: H. J. Mair, S. Roth, 2. Aufl., Carl Hanser Verlag, 1989, München, Wien, S. 21-36, beschrieben.

Bevorzugte Kohlenstoff-Nanofibrillen haben typischerweise die Form von Röhren, die aus mindestens einer Graphit-Schicht gebildet werden. Die Graphitlagen sind in konzentrischer Art um die Zylinderachse angeordnet. Kohlenstoff-Nanofibrillen haben ein Längenzu-Durchmesser-Verhältnis von vorzugsweise wenigstens 5:1, bevorzugt von mindestens 100:1 und besonders bevorzugt von mindestens 1000:1. Der Durchmesser der Nanofibrillen liegt typischerweise im Bereich von 0,001 bis 0,5 µm, vorzugsweise im Bereich von 0,005 bis 0,2 µm, weiter bevorzugt im Bereich von 0,005 bis 0,08 µm, besonders bevorzugt im Bereich von 0,006 bis 0,05 µm. Die Länge der Kohlenstoff-Nanofibrillen beträgt typischerweise 0,5 bis 1000 µm, vorzugsweise 0,8 bis 100 µm, besonders bevorzugt 1 bis 10 µm. Die Kohlenstoff-Nanofibrillen besitzen einen hohlen, zylinderförmigen Kern, um den die Graphitlagen formal gewickelt sind. Dieser Hohlraum hat typischerweise einen Durchmesser von 0,001 bis 0,1 µm, bevorzugt einen Durchmesser von 0,008 0,015 µm. In einer typischen Ausführungsform der Kohlenstoff-Nanofibrillen besteht die Wand der Fibrille um den Hohlraum beispielsweise aus 8 Graphitlagen. Die Kohlenstoff-Nanofibrillen können dabei als Aggregate von bis zu 1000 µm Durchmesser, vorzugsweise bis zu 500 µm Durchmesser aus mehreren Nanofibrillen vorliegen.

Die Zugabe der Kohlenstoff-Nanofibrillen kann vor, während oder nach der Polymerisation bzw. Polykondensation der Monomere zum Polyamid erfolgen. Erfolgt die Zugabe der erfindungsgemäßen Nanofibrillen nach der Polymerisation, so erfolgt sie vorzugsweise durch Zugabe zur Polyamidschmelze in einem Extruder oder in einem Kneter. Durch den Compoundiervorgang im Kneter oder Extruder können insbesondere die bereits beschriebenen Aggregate weitgehend oder sogar vollständig zerkleinert werden und die Kohlenstoff-Nanofibrillen in der Polyamidmatrix dispergiert werden.

In einer bevorzugten Ausführungsform können die Kohlenstoff-Nanofibrillen als hochkonzentrierte Masterbatche in Polyamiden, die bevorzugt den gleichen chemischen Aufbau wie die Polyamidmatrix besitzen, zudosiert werden. Die Konzentration der Kohlenstoff-Nanofibrillen in den Masterbatchen liegt im Bereich von 5 bis 50, bevorzugt 8 bis 30, besonders bevorzugt im Bereich von 12 bis 22 Gew.-%. Die Herstellung von Masterbatches ist beispielsweise in US-A 5643502 beschrieben. Durch den Einsatz von Masterbatches kann insbesondere die Zerkleinerung der Aggregate verbessert werden. Die Kohlenstoff-Nanofibrillen können bedingt durch die Verarbeitung zur Formmasse bzw. Formkörper in der Formmasse bzw. im Formkörper kürzere Längenverteilungen als ursprünglich eingesetzt aufweisen. Kohlenstoff-Nanofibrillen werden beispielsweise von der Fa. Hyperion Catalysis angeboten. Die Synthese der Kohlenstoff-Nanofibrillen erfolgt beispielsweise in einem Reaktor, der ein Kohlenstoff enthaltendes Gas und einen Metallkatalysator enthält, wie es z.B. in US-A 5643502 beschrieben wird.

Als weiteres Leitfähigkeitsadditiv können die Polyamid-Zusammensetzungen allein oder zusätzlich zu Kohlenstoff-Nanofibrillen auch teilchenförmige Kohlenstoffverbindungen wie Ruß, der zur Herstellung von Leitfähigkeit geeignet ist und vom Fachmann auch als Leitfähigkeitsruß bezeichnet wird, oder Graphitpulver enthalten. Dies kann auch expandierten Graphit beinhalten.

Erfindungsgemäß handelt es sich bei Graphitpulvern um zerkleinerten Graphit. Unter Graphit versteht der Fachmann eine Modifikation des Kohlenstoffs, wie sie beispielsweise in A. F. Hollemann, E. Wiberg, N. Wiberg, "Lehrbuch der anorganischen Chemie", 91.-100. Aufl., S. 701-702, beschrieben ist. Graphit besteht aus planaren Kohlenstoffschichten, die übereinander angeordnet sind. Graphit kann beispielsweise durch Mahlen zerkleinert werden. Die Partikelgröße liegt im Bereich von 0,01 µm bis 1 mm, bevorzugt im Bereich von 1 bis 300 µm, am meisten bevorzugt im Bereich von 2 bis 20 µm.

Die Zugabe der erfindungsgemäßen Ruße und/oder Graphite kann vor, während oder nach der Polymerisation bzw. Polykondensation der Monomere zum Polyamid erfolgen. Erfolgt die Zugabe der erfindungsgemäßen Ruße und/oder Graphite nach der Polymerisation, so erfolgt sie vorzugsweise durch Zugabe zur Thermoplastschmelze in einem Extruder oder in einem Kneter. Erfindungsgemäß können die Ruße und/oder Graphite auch als hochkonzentrierte Masterbatches in Polyamiden, die bevorzugt die gleiche chemische Zusammensetzung wie die Polyamidmatrix aufweist, zudosiert werden. Die Konzentration der Ruße und/oder Graphite in den Masterbatches liegt vorzugsweise im Bereich von 3 bis 70, bevorzugt von 5 bis 50 und besonders bevorzugt im Bereich von 7 bis 35 Gew.-%. Erfindungsgemäß können die Ruße und/oder Graphite zur besseren Dosierbarkeit auch mit Bindemitteln, wie beispielsweise Wachsen, Fettsäureestern oder Polyolefinen versetzt sein. Erfindungsgemäß können die Ruße und/oder Graphite auch mit oder ohne zusätzlichen Bindemitteln, beispielsweise durch Press- oder Druckverfahren, pelletisiert oder granuliert sein, was ebenfalls der besseren Dosierbarkeit dient. Auch die Polyamid-Oligomere können den Masterbatches bereits zugesetzt werden. Dies ist vorteilhaft, da sie die Dispergierung der Leitfähigkeitsadditive sowohl in der MB-Matrix als auch in den erfindungsgemäßen Polyamidformmassen erleichtern. Mit solchen Masterbatches können sowohl die Polyamid-Oligomere als auch die Leitfähigkeitsadditve gleichzeitig in hochmolekulares Polyamid eingearbeitet werden.

In einer bevorzugten Ausführungsform können auch Mischungen aus mehreren Graphiten, Mischungen aus mehreren Rußen oder Mischungen aus mindestens einem Graphit und mindestens einem Ruß oder Mischungen aus mindestens einem Ruß und Kohlenstoff-Nanofibrillen eingesetzt werden.

Erfindungsgemäße Leitfähigkeitsruße können beispielsweise unter dem Namen Ketjenblack von der Fa. AKZO Nobel, unter dem Namen Vulcan von der Firma. Cabot oder unter dem Namen Printex von der Fa. Degussa bezogen werden. Erfindungsgemäße Graphite können als Pulver beispielsweise von der Firma Vogel & Prenner, Wiesbaden, Deutschland oder der SGL Carbon bezogen werden.

Als weitere Komponente können die thermoplastischen Formmassen vorzugsweise einen faser- und/oder teilchenförmigen Füllstoff oder Verstärkungsstoff oder eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Glaskugeln und/oder faserförmigen Füllstoffen und/oder Verstärkungsstoffen auf der Basis von Kohlenstofffasern, Metallfasern und/oder Glasfasern enthalten. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat, dauerhaft magnetische bzw. magnetisierbare Metallverbindungen und/oder Legierungen, Glaskugeln oder Glasfasern eingesetzt. Insbesondere bevorzugt werden erfindungsgemäß mineralische teilchenförmige Füllstoffe auf der Basis von Talk, Wollastonit, Kaolin, und/oder Glasfasern. Die Füll- und Verstärkungsmittel können auch oberflächenbehandelt sein.

Insbesondere bei Verwendung von Glasfasern können zusätzlich zu Silanen auch Polymerdispersionen, Filmbildner, Verzweiger und/oder Glasfaserverarbeitungshilfsmittel verwendet werden. Besonders bevorzugt sind erfindungsgemäß auch Glasfasern, die im Allgemeinen einen Faserdurchmesser zwischen 7 und 18, bevorzugt zwischen 9 und 15 µm haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem, z.B. auf Silanbasis, ausgerüstet sein können.

Die Polyamidformmassen enthalten Füll- und Verstärkungsstoffe in Mengen von 0 bis 95 Gew.-%, bevorzugt von 20 bis 65 Gew.-% und besonders bevorzugt von 25 bis 50 Gew.-%, jeweils bezogen auf die gesamte Polyamidformmasse.

Als besonders vorteilhaft erweist sich dabei die kombinierte Zugabe von 10 bis 70 Gew.-% faserförmiger sowie 3 bis 40 Gew.-% teilchenförmiger Füll- und/oder Verstärkungsstoffe.

Natürlich können die erfindungsgemäßen aus thermoplastischen Polyamid-Formmassen gebildeten Gehäuse weiterhin übliche und dem Fachmann allgemein bekannte Zusatzstoffe alleine oder in Kombination enthalten, die ausgewählt sind aus der Gruppe bestehend aus Schlagzähmittel, Fremdpolymer, Haftvermittler, Antiflammmittel, Verstärkungsmittel, wie Glas- und C-Fasern, UV- oder Wärmestabilisatoren, Stabilisatoren gegen Bewitterung, Mineralien, Verarbeitungshilfsmittel, Kristallisations-Beschleuniger oder -Verzögerer, Oxidationsschutzmittel, Fließhilfsmittel, Gleitmittel, Entformungsmittel, Weichmacher, Flammschutzmittel, Pigmente, Farb- und Markierungsstoffe und Füllstoffe wie Ruß oder Graphit oder auch Nanoteilchen in Plättchenform, entsprechend allen bei Polyamiden bekannten Zusatzstoffen, wie sie für die jeweilige Anwendung notwendig sind.

Den zuvor beschriebenen (Co)Polyamiden oder Gemischen davon können für bestimmte Zwecke auch andere übliche Polymere wie Polyester, Polyolefine, Polycarbonate, AN- und ABS-Polymerisate, funktionalisierte Copolyolefine und Ionomere zugesetzt sein.

Als weitere Zusatzstoffe sind den erfindungsgemäßen thermoplastischen Polyamid-Formassen Schlagzähmodifikatoren zugesetzt. Diese sind z. B. Copolymere auf Polyolefinbasis von tiefer Glasumwandlungstemperatur, die Acrylsäure enthalten oder mit Maleinsäureanhydrid gepfropft sein können. Insbesondere seien hier Schlagzähmodifikatoren wie Ethylen-Propylen-Copolyolefine oder Ethylen-Propylen-Dien-Kautschuke (EPDM) oder Acrylatkautschuke genannt.

In bevorzugten Ausführungsformen enthalten die Formmassen der Gehäuse weiterhin nanoskalige Füllstoffe. In einer besonderen Ausführungsform der Erfindung sind die nanoskaligen Füllstoffe entweder Siliziumdioxid oder Siliziumdioxid-Hydrate. In der PolyamidFormmasse liegen gewisse nanoskalige Füllstoffe in einer Ausführungsform als gleichmäßig dispergiertes, schichtförmiges Material vor.

Als Füllstoffe können weiterhin dauerhaft magnetische bzw. magnetisierbare Metallverbindungen und/oder Legierungen eingesetzt werden. Diese sind vorzugsweise in einer Menge von 60 bis 95 Gew.-% in der Polyamidformmasse enthalten.

Als Füllstoffe sind Metalle oder Legierungen, insbesondere Seltenerdmetallpulver (inkl. Yttrium) des Typs Seltenerdmetall/Eisen/Bor bevorzugt, wobei Nd/Fe/B auch als "Neodymium" bezeichnet, ganz besonders bevorzugt ist.

Vorteilhaft sind auch die für Magnetwerkstoffe bekannten Legierungen Samarium/Cobalt und Samarium/Thulium, Ferrite, wie Barium- und Strontiumferrit, sowie Carbonyleisenpulver. Geeignete Metallpulver sind z.B. beschrieben im Firmenprospekt DR 9632 MAG der Firma Delco Remy, Anderson, IN 46013, USA und tragen die Bezeichnung Magnequench^{®} Products.

Hochwertige Magnetprodukte sind insbesondere Nd/Fe/B; SmTm, z.B. Sm₂Tm₁₇; SmCo, z.B. SmCo₅. Prinzipiell kommen aber alle magnetischen und/oder magnetisierbaren Metallpulver und Metallverbindungen in Frage. Dabei ist es vorteilhaft, aber nicht erforderlich, dass sie gecoatet sind. Geeignete Coats für Ferrite sind Stand der Technik.

Besonders hervorzuheben ist dabei, dass, wie die Anmelderin zeigen konnte, die erfindungsgemäßen Gehäuse, insbesondere Mobiltelefongehäuse, einen Verzug kleiner als 6 %, bevorzugt kleiner als 3 % aufweisen.

Die folgenden Beispiele erläutern die vorliegende Erfindung, ohne sie einzuschränken.

### Beispiele und Vergleichsbeispiele

### Eingesetzte Materialien:

### Polyamide

| Polyamid-Typ | Relative Viskosität (0,5 % in m-Kresol) | Volumenfließindex (MVR) (275°C/5 kg (cm³/10 min)) |
|---|---|---|
| PA12 Grilamid L20*⁾ | 1,9 | 75-100 |
| Grilamid TR70*⁾ | 1,4-1.5 | 5-10 |

| | | |
|---|---|---|
| *) Handelsprodukt der Firma EMS-CHEMIE AG. | | |

### Ruß

| Russ-Typ | BET (ASTM D3037), [m2/g] | DBP (ASTM D2414) [mL/100g] |
|---|---|---|
| Ensaco 250 Handelsprodukt der Firma Timcal/Belgien | 65 | 190 |
| Ketjenblack EC-600 JD Handelsprodukt der Firma Akzo Nobel | 1270 | 480-510 |

### Oligomer

### PA12-Oligomer der folgenden Zusammensetzung

| Polyamid-Typ | Relative Viskosität (0,5 % in m-Kresol) | Endgruppenkonzentration | Molmasse (g/mol) |
|---|---|---|---|
| PA12-Oligomer | 1.1 | NH₂/COOH 20/50 | 2000 |

### Glasfaser

E-Glas, Polyamid-Typ, Durchmesser 10 µm, Länge 4,5 mm

### Stabilisatoren

Irganox 245: Handelsprodukt der Firma Ciba Speciality Chemicals Triethylenglycol-bis(3-(3'-tert-butyl-4'-hydroxy-5'-methylphenyl)propionat
Hostanox PAR24: Handelsprodukt der Firma Clariant Tris(2,4-di-tert-butylphenyl)phosphit

Die erfindungsgemäßen antistatischen Formmassen (VB 1 und 2, sowie B1 bis B5) wurden auf einem Buss Ko-Kneter MDK 46 der Firma Coperion bei Temperaturen zwischen 240 und 300°C hergestellt. Dabei wurden Po-lymere, Stabilisatoren und Oligomere in den Einzug des Extruders sowie Glasfasern und Ruße in die Schmelze dosiert.

Die erfindungsgemäßen Formmassen aus VB3 und VB4, sowie B6 und B7 wurden auf einem Zweiwellenkneter ZSK25 der Firma Werner und Pfleiderer bei Temperaturen zwischen 240 und 300°C hergestellt. Dabei wurden Polymere, Stabilisatoren und Oligomere in den Einzug des Extruders sowie Glasfasern in die Schmelze dosiert.

Die hergestellten Formmassen wurden wie folgt geprüft:
- MVR:: (Melt volume rate) bei 275°C nach ISO 1133
- SZ:: Schlagzähigkeit nach ISO 179/1eU
- KSZ:: Kerbschlagzähigkeit nach ISO 179/1eA
- OWS:: spezifischer Oberflächenwiderstand nach IEC60093 an 100 x 100 x 3 mm Platten

Streckspannung, Reißdehnung und Zug-E-Modul wurden gemäß ISO527 ermittelt.

### Sourgastest:

Die Peroxidbeständigkeit wurde an 1 mm-Schlagzugstäben geprüft. Dazu wurden Prüfkörper in einem Gemisch aus 42,5 % Toluol, 42,5 % Isooctan und 15 % Methanol, das zusätzlich 180 mmol/l tert-Butylhydroperoxid und 10 mg Cu²⁺/l enthält, bei 60°C 15 Tage gelagert. Verglichen wird die Reißdehnung der Prüfkörper vor und nach der Lagerung. Angegeben in der Tabelle ist die prozentuale Änderung der Reißdehnung. Die Fließlängen wurden mittels einer Arburg-Spritzgussmaschine (Typ: ARBURG - ALLROUNDER 320-210-750) bestimmt. Es wurden Fließpiralen der Dimension 1,5 mm x 10 mm) bei einer Massetemperatur von 270°C und einer Formtemperatur von 80°C angefertigt.

Tabelle 1 fasst die Zusammensetzungen der Beispiele B1 - B3 und des Vergleichsbeispieles VB1 sowie Eigenschaften der hergestellten Polyamidformmassen zusammen.

Tabelle 2 fasst die Zusammensetzungen der Beispiele B4 und B5 und des Vergleichsbeispieles VB2 sowie die Eigenschaften der hergestellten Polyamidformmassen zusammen.

Tabelle 3 fasst die Zusammensetzungen der Beispiele B6 und B7 und der Vergleichsbeispiele VB3 und VB4 sowie die Eigenschaften der hergestellten Polyamidformmassen zusammen.

Tabelle 4 fasst die Zusammensetzungen der Beispiele B8 - B15 sowie die Eigenschaften der hergestellten Polymaidformmassen zuusammen.

Die mechanischen Werte wurden in trockenem Zustand bestimmt.

Die Figur zeigt ein spritzgegossenes Formteil, an dem die Bestimmung des Verzugs durchgeführt wird.

Das eingesetzte Homopolyamid PA MACM12 hatte eine Lösungsviskosität (0.5% in m-Kresol) von 1.67, das Copolyamid PA6I6T eine Lösungsviskosität von 1.42.

Es wurden folgende teilchenförmige Füllstoffe eingesetzt:

| **Bezeichnung** | **Zusammensetzung** | **Hersteller/Lieferant** |
|---|---|---|
| Microtalk IT extra | Magnesiumsilikat | Norwegian Talc. B.V. |
| Microcarb-OG | Calciumcarbonat gemahlen | OMYA AG (Schweiz) |
| Socal U1 | Calciumcarbonat gefällt | Solvay Advanced Functional Materials (Italien) |
| Kaolin (China Clay) | Aluminiumsilikat | ECC International Ltd. (UK-Cornwall) |

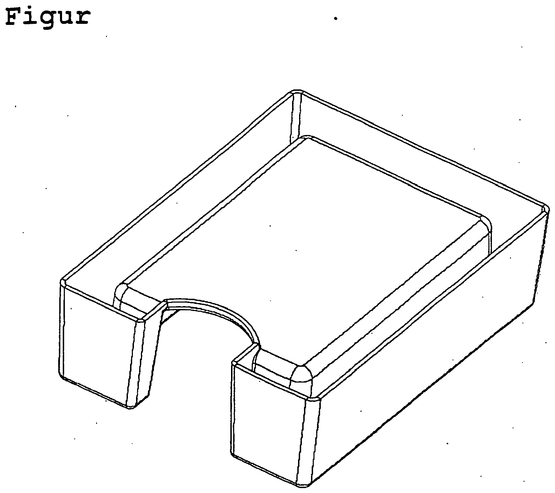

Der Verzug wurde anhand eines spritzgegossenen "Visitenkarten-Halters" bestimmt (siehe hierzu Figuren 1 und 2). Nach 14 Tagen Lagerung bei Normklima (23°C, 50% rel. Feuchte) wird die Breite gemessen und im Verhältnis zum Werkzeugmaß (Breite der Kavität: 90.2 mm) gesetzt. Je höher die Differenz, umso größer ist der Verzug. Die Formteile wurden auf einer Arburg Spritzgussmaschine (Typ Arburg-Allrounder 320-210-750) bei einer Massetemperatur von 270°C und einer Formtemperatur von 80°C hergestellt. Die Ergebnisse sind in Tabelle 4 zusammengefasst.

**Tabelle 1**

| **Zusammensetzung** | | | | | | |
|---|---|---|---|---|---|---|
| **Komponenten** | **Bedingung** | **Einheit** | **VB 1** | **B 1** | **B 2** | **B 3** |
| Grilamid L20 (Polyamid 12) | | Gew.-% | 62,65 | 57,65 | 52,65 | 47,65 |
| PA12-Oligomer | | Gew.-% | 0 | 5,00 | 10,00 | 15,00 |
| Glasfaser | | Gew.-% | 20,00 | 20,00 | 20,00 | 20,00 |
| Russ ENSACO 250 | | Gew.-% | 17,00 | 17,00 | 17,00 | 17,00 |
| HOSTANOX PAR 24 | | Gew.-% | 0,10 | 0,10 | 0,10 | 0,10 |
| IRGANOX 245 | | Gew.-% | 0,25 | 0,25 | 0,25 | 0,25 |

| **Eigenschaften der Polyamidformmassen** | | | | | | |
|---|---|---|---|---|---|---|
| H₂O-Gehalt | | Gew.-% | 0,003 | 0,05 | 0,02 | 0,04 |
| MVR | 275 °C; 10 kg | cm³/10 min | 26 | 49 | 81 | 213 |
| Fließlänge | | mm | 152 | 188 | 219 | 257 |
| Zuq-E-Modul | - | MPa | 5400 | 5200 | 5000 | 5000 |
| Streckspannung | - | MPa | 93 | 93 | 92 | 92 |
| Streckdehnung | - | % | 3,7 | 3,9 | 4,1 | 4 |
| Bruchspannung | - | MPa | 90 | 92 | 91 | 91 |
| Bruchdehnung | - | % | 5,7 | 5,2 | 5,3 | 4,6 |
| SZ | 23 °C | kJ/m² | 66 | 68 | 63 | 52 |
| SZ | -30 °C | kJ/m² | 50 | 46 | 38 | 30 |
| KSZ | 23 °C | kJ/m² | 11,4 | 10 | 7,7 | 6,8 |
| KSZ | -30 °C | kJ/m² | 5,7 | 5,6 | 5,4 | 5,2 |
| OWS | - | Ohm | 2,60E+0 5 | 1,50E+0 4 | 1,00E+0 4 | 9,60E+0 3 |
| Sourqas (%) | | | +62 | +56 | +45 | +30 |

**Tabelle 2**

| **Zusammensetzung** | | | | | |
|---|---|---|---|---|---|
| **Komponenten** | **Bedingung** | **Einheit** | **VB 2** | **B 4** | **B 5** |
| Grilamid L20 (Polyamid 12) | | Gew.-% | 62.65 | 57.65 | 52.65 |
| PA12-Oligomer | | Gew.-% | 0 | 5.00 | 10.00 |
| Glasfaser | | Gew.-% | 30.00 | 30.00 | 30.00 |
| Russ Ketjenblack EC-600 JD | | Gew.-% | 7.00 | 7.00 | 7.00 |
| HOSTANOX PAR24 | | Gew.-% | 0.10 | 0.10 | 0.10 |
| IRGANOX 245 | | Gew.-% | 0.25 | 0.25 | 0.25 |
| | | | | | |

| **Eigenschaften der Polyamidformmassen** | | | | | |
|---|---|---|---|---|---|
| H₂O Gehalt | | Gew.-% | 0.08 | 0.03 | 0.03 |
| MVR | 275°C/21 .6 kq | cm3/10min | 27 | 37 | 66 |
| Fliesslänqe | | mm | 124 | 146 | 172 |
| Zug E-Modul | - | MPa | 7200 | 7200 | 7100 |
| Bruchspannung | - | MPa | 120 | 120 | 120 |
| Bruchdehnung | - | % | 6.5 | 5.7 | 5.5 |
| SZ | 23°C | kJ/m² | 90 | 80 | 80 |
| SZ | -30°C | kJ/m² | 90 | 85 | 65 |
| KSZ | 23°C | kJ/m² | 15 | 13 | 11 |
| KSZ | -30°C | kJ/m² | 13 | 9 | 8 |
| OWS | - | Ohm | 110 | 180 | 180 |
| Sourgas (%) | | | +15 | +25 | +15 |

**Tabelle 3**

| **Zusammensetzung** | | | | | | |
|---|---|---|---|---|---|---|
| **Komponenten** | **Bedingung** | **Einheit** | **VB 3.** | **B 6** | **VB 4** | **B 7** |
| Grilamid L20 (Polyamid 12) | | Gew.-% | 34,7 | 33.19 | 26.075 | 23.465 |
| PA12-Oligomer | | Gew.-% | 0 | 1.735 | 0 | 3.47 |
| Glasfaser | | Gew.-% | 65 | 65 | 65 | 65 |
| Grilamid TR70 | | Gew.-% | 0. | 0 | 8.675 | 7.82 |
| HOSTANOX PAR 24 | | Gew.-% | 0,05 | 0,05 | 0 | 0 |
| IRGANOX 245 | | Gew.-% | 0,25 | 0,025 | 0,25 | 0,25 |

| **Eigenschaften der Polyamidformmassen** | | | | | | |
|---|---|---|---|---|---|---|
| H₂O-Gehalt | | Gew.-% | 0,02 | 0,03 | 0,02 | 0,01 |
| MVR | 275 °C; 5 kg | cm³/10 min | 52 | 112 | 5.4 | 9. 7 |
| Fließlänqe | | mm | 146 | 163 | 133 | 182 |
| Zuq-E-Modul | - | MPa | 17000 | 17000 | 18200 | 18500 |
| Bruchspannung | - | MPa | 171 | 171 | 189 | 184 |
| Bruchdehnung | - | % | 4.5 | 4 | 3.4 | 2. 6 |
| SZ | 23 °C | kJ/m² | 61 | 61 | 67 | 52 |
| SZ | -30 °C | kJ/m² | 75 | 64 | 74 | 55 |
| KSZ | 23 °C | kJ/m² | 21 | 19 | 17 | 14 |
| KSZ | -30 °C | kJ/m² | 17 | 16 | 14 | 11 |

**Tabelle 4**

| **Zusammensetzung** | | | | | | | | | |
|---|---|---|---|---|---|---|---|---|---|
| Komponenten | Einheit | B8 | B9 | B10 | B11 | B12 | B13 | B14 | B15 |
| PA MACM12 | Gew.-% | 63 | 45 | 36 | 36 | 36 | 36 | 36 | |
| PA 6I6T (30:70) | Gew.-% | | | | | | | | 47 |
| PA 12 Oligomer | Gew.-% | 7 | 5 | 4 | 4 | 4 | 4 | 4 | 3 |
| Glasfaser | Gew.-% | 30 | 50 | 50 | 40 | 30 | 40 | 40 | 40 |
| Millicarb | Gew.-% | | | 10 | 20 | | | | 10 |
| Kaolin | Gew.-% | | | | | 30 | | | |
| Socal U1 | Gew.-% | | | | | | | 20 | |
| Mikrotalk IT extra | Gew.-% | | | | | | 20 | | |

| **Eigenschaften der Polyamidformmassen** | | | | | | | | | |
|---|---|---|---|---|---|---|---|---|---|
| Wassergehalt | Gew.-% | 0.03 | 0.03 | 0.02 | 0.03 | 0.03 | 0.03 | 0.03 | 0.02 |
| MVR (275°C/5kg) | ccm/10min | 56 | 27 | 13 | 14 | 15 | 16 | 14 | 25 |
| Verzug | % | 1.6 | 2.0 | 2.0 | 1.8 | 1.5 | 1.6 | 1.9 | 1.3 |

## Patentansprüche

1. Gehäuse, insbesondere Mobiftelefongehäuse aus einer Polyamid-Formmasse bestehend aus
mindestens einem thermoplastischem Polyamid und mindestens einem Polyamid-Oligomer mit linearer oder verzweigter Kettenstruktur mit einer zahlenmittleren Molmasse von 800 bis 5000 g/mol mit basischen Endgruppen und Carboxylendgruppen, wobei eine dieser Endgruppen im Überschuss vorliegt und die Konzentration der im Überschuss vorliegenden Endgruppe maximal 300 mmol/kg beträgt im Gewichtsverhältnis thermoplastisches Polyamid : Polyamid-Oligomer von 70:30 bis 99,5:0,5,
bis 50 Gew.-%, bezogen auf die gesamte Polyamidformmasse, einem Leitfähigkeitsadditiv,
bis zu 95 Gew.-%, bezogen auf die gesamte Polyamidformmasse, Füll- und/oder Verstärkungsstoffen, ausgewählt aus der Gruppe bestehend aus faserförmigen und/oder teilchenförmigen Materialien, sowie
ggf. weiteren Zusatz- bzw. Additivstoffen, ausgewählt aus, Schlagzähmitteln, Fremdpolymeren, Haftvermittlern, Antiflammmitteln, Stabilisatoren, Mineralien, Verarbeitungshilfsmitteln, Kristallisations-Beschleunigern oder-Verzögerern, Oxidationsschutzmitteln, Fließhilfsmitteln, Gleitmitteln, Entformungsmitteln, Weichmacher, Flammschutzmitteln, Pigmenten und/oder Farb- und Markierungsstoffen
**dadurch gekennzeichnet, dass**
die basischen Endgruppen zumindest teilweise NH₂-Endgruppen sind.

2. Gehäuse nach Anspruch 1, **dadurch gekennzeichnet, dass** die basischen Endgruppen neben den NH₂-Endgruppen zusätzliche Endgruppen, ausgewählt aus der Gruppe bestehend aus primären, sekundären, tertiären Aminoendgruppen oder Carboxylat enthalten.

3. Gehäuse nach einem der vorhergehenden Ansprüche, **dadurch gekennzeichnet, dass** das Polyamid-Oligomer erhalten worden ist aus den Polyamid-bildenden Monomeren Diamin und/oder Dicarbonsäure und/oder Aminocarbonsäure oder Lactam sowie bezüglich der Kondensationsreaktion monofunktionell wirkenden Strukturelementen ausgewählt aus Amin und/oder Carbonsäure, wobei die Endgruppen insgesamt zu mindestens 50 % durch diese monofunktionellen Strukturelemente gebildet sind.

4. Gehäuse nach einem der vorhergehenden Ansprüche, **dadurch gekennzeichnet, dass** das mindestens eine thermoplastische Polyamid aus den Polyamid-bildenden Monomeren Diamin und/oder Dicarbonsäure und/oder Aminosäure oder Lactam erhalten worden ist.

5. Gehäuse nach vorhergehendem Anspruch, **dadurch gekennzeichnet, dass** als Aminosäure aliphatische ω-Aminocarbonsäuren mit 4 bis 44 Kohlenstoffatomen und/oder aromatische ω-Aminocarbonsäuren mit 6 bis 20 Kohlenstoffatomen und als Dicarbonsäure solche mit 2 bis 44 Kohlenstoffatomen ausgewählt sind.

6. Gehäuse nach einem der beiden vorhergehenden Ansprüche, **dadurch gekennzeichnet, dass** die Polyamide ausgewählt sind aus Homo- und/oder Copolyamiden auf Basis von PA6, PA66, PA46, PA11, PA12, PA1212, PA1012, PA610, PA612, PA69, PA1010, PA6T, PA6T6I, PA6T66, PA9T, PA10T, PA12T, PA12I, PA 6I, 6I/6T, MXDI/6I, MXDI/MXDT/6I/6T, MXDI/12I, MACMI/12, MACMI/MACMT/12, 6I/MACMI/12, 6I/6T/MACMI/-MACMT/12, PACM6/11, PACM12, PACMI/PACM12, MACM6/11, MACM12, MACMI/MACM12, MACM12/PACM12, 6I/6T/PACMI/ PACMT/PACM12/612, insbesondere PA66, PA1010, PA6I/6T und/oder deren Gemische sind.

7. Gehäuse nach einem der vorhergehenden Ansprüche, **dadurch gekennzeichnet, dass** die Formmasse 3 bis 25 Gew.-%, bezogen auf die gesamte Polyamidformmasse, eines Leitfähigkeitsadditivs enthält.

8. Gehäuse nach einem der vorhergehenden Ansprüche, **dadurch gekennzeichnet, dass** die Formmasse 10 bis 70 Gew.-% faserförmige und 3 bis 40 Gew.-% teilchenförmige Füll- und/oder Verstärkungsstoffe bezogen auf die gesamte Polyamidformmasse enthält.

9. Gehäuse nach einem der vorhergehenden Ansprüche, **dadurch gekennzeichnet, dass** als Füll- und/oder Verstärkungsstoff Mischungen aus mindestens zwei Füll- und/oder Verstärkungsstoffen eingesetzt werden.

10. Gehäuse nach einem der vorhergehenden Ansprüche, **dadurch gekennzeichnet, dass** die Füll- und/oder Verstärkungsstoffe ausgewählt sind aus Talk, Glimmer, Silikat, Quarz, Titandioxid, Wollastonit, Kaolin, Kieselsäuren, Magnesiumcarbonat, Magnesiumhydroxid, Kreide, gemahlenes oder gefälltes Calciumcarbonat, Kalk, Feldspat, Bariumsulfat, dauerhaft magnetische bzw magnetisierbare Metallverbindungen und/oder Legierungen, Glaskugeln, Glasfasern und/oder weiteren faserförmigen Füllstoffen und/oder Verstärkungsstoffen, insbesondere Glasfasern.

11. Gehäuse nach einem der vorhergehenden Ansprüche, **dadurch gekennzeichnet, dass** die Formmasse zumindest ein amorphes oder mikrokristallines Polyamid enthält.

12. Gehäuse nach einem der Ansprüche 1 bis 10, **dadurch gekennzeichnet, dass** die Formmasse zumindest ein teilkristallines Polyamid enthält.

13. Gehäuse nach einem der vorhergehenden Ansprüche, **dadurch gekennzeichnet, dass** die Formmasse eine Kombination von zumindest einem amorphen oder einem mikrokristallinen Polyamid und zumindest einen teilkristallinen Polyamid enthält.

## Claims

1. Housing, in particular mobile telephone housing made of a polyamide moulding compound consisting of
at least one thermoplastic polyamide and at least one polyamide oligomer having a linear or branched chain structure having a number average molar mass of 800 to 5000 g/mol having basic end groups and carboxyl groups, wherein one of these end groups is in abundance and the concentration of the abundantly present end group amounts to a maximum of 300 mmol/kg, in the weight ratio thermoplastic polyamide :
polyamide oligomer of 70:30 to 99.5:0.5,
up to 50 wt% in terms of the total polyamide moulding compound, of a conductivity additive,
up to 95 wt% in terms of the total polyamide moulding compound, filler and/or strengthening material, selected from the group consisting of fibre-shaped and/or particle-shaped materials, and
where necessary, further additives, selected from impact-resistant agents, foreign polymers, bonding agents, flame retardants, stabilisers, minerals, processing aids, crystallisation catalysts or delayers, oxidisation preservatives, flow aids, lubricants, demoulding agents, softeners, fireproofing agents, pigments and/or colourants and tracing substances,
**characterised in that**
the basic end groups are at least partially NH₂ end groups.

2. Housing according to claim 1, **characterised in that** the basic end groups along with the NH₂ end groups contain additional end groups, selected from the group consisting of primary, secondary, tertiary amino end groups or carboxylate.

3. Housing according to one of the preceding claims, **characterised in that** the polyamide oligomer has been obtained from the polyamide-forming monomers diamine and/or dicarboxylic acid and/or aminocarboxylic acid or lactam and, concerning the condensation reaction, monofunctionally effective structure elements selected from amine and/or carboxylic acid, wherein the end groups are formed in total up to at least 50% by these monofunctional structure elements.

4. Housing according to one of the preceding claims, **characterised in that** the at least one thermoplastic polyamide has been obtained from the polyamide-forming monomers diamine and/or dicarboxylic acid and/or amino acid or lactam.

5. Housing according to the preceding claim, **characterised in that** aliphatic ω-aminocarboxylic acids having 4 to 44 carbon atoms and/or aromatic ω-aminocarboxylic acids having 6 to 20 carbon atoms are selected as amino acids, and those having 2 to 44 carbon atoms as dicarboxylic acids.

6. Housing according to one of the two preceding claims, **characterised in that** the polyamide is selected from homo- and/or co-polyamides based on PA6, PA66, PA46, PA11, PA12, PA1212, PA1012, PA610, PA612, PA69, PA1010, PA6T, PA6T6I, PA6T66, PA9T, PA10T, PA12T, PA12I, PA 6I, 6I/6T, MXDI/6I, MXDI/MXDT/6I/6T, MXDI/12I, MACMI/12, MACMI/MACMT/12, 6I/MACMI/12, 6I/6T/MACMI/MACMT/12, PACM6/11, PACM12, PACMI/PACM12, MACM6/11, MACM12, MACMI/MACM12, MACM12/PACM12, 6I/6T/PACMI/PACMT/PACM12/612, in particular PA66, PA1010, PA6I/6T and/or mixtures thereof.

7. Housing according to one of the preceding claims, **characterised in that** the moulding compound contains 3 to 25 wt%, in terms of the total polyamide moulding compound, of a conductivity additive.

8. Housing according to one of the preceding claims, **characterised in that** the moulding compound contains 10 to 70 wt% fibre-shaped and 3 to 40 wt% particle-shaped filler or strengthener in terms of the total polyamide moulding compound.

9. Housing according to one of the preceding claims, **characterised in that** mixtures formed of at least two fillers and/or strengtheners are used as the filler and/or strengthener.

10. Housing according to one of the preceding claims, **characterised in that** the fillers and/or strengtheners are selected from talc, mica, silicate, quartz, titanium dioxide, wollastonite, kaolin, silicic acids, magnesium carbonate, magnesium hydroxide, chalk, ground or precipitated calcium carbonate, limestone, feldspar, barium sulphate, permanent magnetic or magnetisable metal compounds and/or alloys, marbles, fibre glass and/or further fibre-shaped fillers and/or strengtheners, in particular fibre glass.

11. Housing according to one of the preceding claims, **characterised in that** the moulding compound contains at least one amorphic or microcrystalline polyamide.

12. Housing according to one of claims 1 to 10, **characterised in that** the moulding compound contains at least one partial crystalline polyamide.

13. Housing according to one of the preceding claims, **characterised in that** the moulding compound contains a combination of at least one amorphic or one microcrystalline polyamide and at least one partial crystalline polyamide.

## Revendications

1. Boîtier, en particulier boîtier pour téléphone mobile, constitué d'un mélange à mouler de polyamides, consistant en
au moins un polyamide thermoplastique et au moins un oligomère de polyamide ayant une structure de chaîne linéaire ou ramifiée, et une masse moléculaire moyenne en nombre de 800 à 5000 g/mol, avec des groupes terminaux basiques et des groupes terminaux carboxyle, l'un de ces groupes terminaux étant présent en excès, et la concentration du groupe terminal présent en excès étant au maximum de 300 mmol/kg, selon un rapport en poids polyamide thermoplastique/oligomère de polyamide de 70/30 à 99,5/0,5,
jusqu'à 50 % en poids, d'un additif de conductivité, par rapport au mélange à mouler de polyamides total,
jusqu'à 95 % en poids, par rapport au mélange à mouler de polyamides total, de matières de charge et/ou de renforcement, choisies dans le groupe consistant en les matériaux fibreux et/ou particulaires, ainsi que
éventuellement des additifs ou des substances ajoutées supplémentaires, choisies parmi les modifiants choc, les polymères étrangers, les promoteurs d'adhérence, les retardateurs de flamme, les stabilisants, les minéraux, les auxiliaires de mise en oeuvre, les accélérateurs ou retardateurs de cristallisation, les agents de protection contre l'oxydation, les auxiliaires d'écoulement, les lubrifiants, les agents de démoulage, les plastifiants, les agents d'ignifugation, les pigments et/ou les colorants et agents de marquage,
**caractérisé en ce que**
les groupes terminaux basiques sont au moins partiellement des groupes terminaux NH₂.

2. Boîtier selon la revendication 1, **caractérisé en ce que** les groupes terminaux basiques contiennent, outre les groupes terminaux NH₂, des groupes terminaux supplémentaires, choisis dans le groupe consistant en les groupes terminaux amino secondaires, tertiaires, ou un carboxylate.

3. Boîtier selon l'une des revendications précédentes, **caractérisé en ce que** l'oligomère de polyamide a été obtenu à partir de monomères générateurs de polyamides diamine et/ou d'acide dicarboxylique et/ou d'acide aminocarboxylique ou de lactame, ainsi que d'éléments structuraux à action monofonctionnelle concernant la réaction de condensation, choisis parmi une amine et/ou un acide carboxylique, les groupes terminaux étant globalement formés, à raison d'au moins 50 %, par ces éléments structuraux monofonctionnels.

4. Boîtier selon l'une des revendications précédentes, **caractérisé en ce qu'**au moins un polyamide thermoplastique a été obtenu à partir des monomères générateurs de polyamides diamine et/ou acide dicarboxylique et/ou acide aminé ou lactame.

5. Boîtier selon l'une des revendications précédentes, **caractérisé en ce que** l'on choisit en qualité d'acide aminé des acides ω-aminocarboxyliques aliphatiques ayant 4 à 44 atomes de carbone et/ou des acides ω-aminocarboxyliques aromatiques ayant 6 à 20 atomes de carbone, et en qualité d'acide dicarboxylique ceux qui ont 2 à 44 atomes de carbone.

6. Boîtier selon l'une des deux revendications précédentes, **caractérisé en ce que** les polyamides sont choisis parmi les homo- et/ou copolyamides à base de PA6, de PA66, de PA46, de PA11, de PA12, de PA1212, de PA1012, de PA610, de PA612, de PA69, de PA1010, de PA6T, de PA6T6I, de PA6T66, de PA9T, de PA10T, de PA12T, de PA12I, de PA6I, de 6I/6T, de MXDI/6I, de MXDI/MXDT/6I/6T, de MXDI/12I, de MACMI/12, de MACMI/MACMT/12, de 6I/MACMI/12, de 6I/6T/MACMI/-MACMT/12, de PACM6/11, de PACM12, de PMCMI/PACM12, de MACM6/11, de MACM12, de MACMI/MACM12, de MACM12/PACM12, de 6I/6T/PACMI/PACMT/PACM12/612, en particulier de PA66, de PA1010, de PA6I/6T et/ou de mélanges de ceux-ci.

7. Boîtier selon l'une des revendications précédentes, **caractérisé en ce que** le mélange à mouler contient 3 à 25 % en poids d'un additif de conductivité, par rapport au mélange à mouler de polyamides total.

8. Boîtier selon l'une des revendications précédentes, **caractérisé en ce que** le mélange à mouler contient 10 à 70 % en poids de matières de charge et/ou de renforcement fibreuses et de 3 à 40 % en poids de matières de charge et/ou de renforcement particulaires, par rapport au mélange à mouler de polyamides total.

9. Boîtier selon l'une des revendications précédentes, **caractérisé en ce qu'**on utilise en tant que matière de charge et/ou de renforcement des mélanges d'au moins deux matières de charge et/ou de renforcement.

10. Boîtier selon l'une des revendications précédentes, **caractérisé en ce que** les matières de charge et/ou de renforcement sont choisies parmi le talc, le mica, un silicate, le quartz, le dioxyde de titane, la wollastonite, le kaolin, les silices, le carbonate de magnésium, l'hydroxyde de magnésium, la craie, le carbonate de calcium broyé ou précipité, la chaux, le feldspath, le sulfate de baryum, les composés métalliques et/ou alliages à aimantation permanente ou aimantables, les billes de verre, les fibres de verre et/ou des matières de charge et/ou les matières de renforcement fibreuses supplémentaires, en particulier les fibres de verre.

11. Boîtier selon l'une des revendications précédentes, **caractérisé en ce que** le mélange à mouler contient au moins un polyamide amorphe ou microcristallin.

12. Boîtier selon l'une des revendications 1 à 10, **caractérisé en ce que** le mélange à mouler contient au moins un polyamide partiellement cristallin.

13. Boîtier selon l'une des revendications précédentes, **caractérisé en ce que** le mélange à mouler contient une combinaison d'au moins un polyamide amorphe ou microcristallin et d'au moins un polyamide partiellement cristallin.
